# EUROPÄISCHE PATENTSCHRIFT

(11) **EP 4 361 413 B1**
(45) Veröffentlichungstag und Bekanntmachung des Hinweises auf die Patenterteilung: **09.04.2025**
(21) Anmeldenummer: 23205411.4
(22) Anmeldetag: 24.10.2023
(51) Int. Cl.: F01N 3/20, F01N 9/00, F01N 13/00

(54) **VERFAHREN ZUM BETREIBEN EINES ABGASNACHBEHANDLUNGSSYSTEMS SOWIE ABGASNACHBEHANDLUNGSSYSTEM**
METHOD FOR OPERATING AN EXHAUST GAS AFTERTREATMENT SYSTEM AND EXHAUST GAS AFTERTREATMENT SYSTEM
PROCÉDÉ DE FONCTIONNEMENT D'UN SYSTÈME DE POST-TRAITEMENT DES GAZ D'ÉCHAPPEMENT ET SYSTÈME DE POST-TRAITEMENT DES GAZ D'ÉCHAPPEMENT

(30) Priorität: 27.10.2022 DE 102022128485
(43) Veröffentlichungstag der Anmeldung: 01.05.2024
(73) Patentinhaber: VOLKSWAGEN AG, 38440 Wolfsburg (DE)
(72) Erfinder: GIESELER, Marc Timo, 38446 Wolfsburg (DE); DEUTENBERG, Giselher, 38536 Meinersen (DE); REGNER, Lars, 38162 Cremlingen (DE); THIELE, Tim, 38104 Braunschweig (DE)
(74) Vertreter: Gulde & Partner

(56) Entgegenhaltungen:
- EP-A1- 2 025 388
- EP-A1- 3 943 725
- DE-A1- 102008 036 885
- DE-A1- 102015 221 982
- DE-A1- 102019 107 544

## Beschreibung

Die Erfindung betrifft ein Verfahren zum Betreiben eines Abgasnachbehandlungssystems mit mindestens zwei in Reihe geschalteten SCR-Katalysatoren sowie ein Abgasnachbehandlungssystem zur Durchführung eines solchen Verfahrens gemäß dem Oberbegriff der unabhängigen Patentansprüche.

Die aktuelle und eine zukünftig immer schärfer werdende Abgasgesetzgebung stellen hohe Anforderungen an die motorischen Rohemissionen und die Abgasnachbehandlung von Verbrennungsmotoren. Dabei stellen die Forderungen nach einem weiter sinkenden Verbrauch und die weitere Verschärfung der Abgasnormen hinsichtlich der zulässigen StickoxidEmissionen eine Herausforderung für die Motorenentwickler dar. Bei Ottomotoren erfolgt die Abgasreinigung in bekannter Weise über einen Drei-Wege-Katalysator, sowie dem Drei-Wege-Katalysator vor- und nachgeschaltete weitere Katalysatoren. Bei Dieselmotoren finden aktuell Abgasnachbehandlungssysteme Verwendung, welche einen Oxidationskatalysator oder ein NOx-Speicherkatalysator, einen Katalysator zur selektiven katalytischen Reduktion von Stickoxiden (SCR-Katalysator) sowie einen Partikelfilter zur Abscheidung von Rußpartikeln und gegebenenfalls weitere Katalysatoren aufweisen. Als Reduktionsmittel wird dabei bevorzugt Ammoniak verwendet. Weil der Umgang mit reinem Ammoniak aufwendig ist, wird bei Fahrzeugen üblicherweise eine synthetische, wässrige Harnstofflösung verwendet, die in einer dem SCR-Katalysator vorgeschalteten Mischeinrichtung mit dem heißen Abgasstrom vermischt wird. Durch diese Vermischung wird die wässrige Harnstofflösung erhitzt, wobei die wässrige Harnstofflösung Ammoniak im Abgaskanal freisetzt. Eine handelsübliche, wässrige Harnstofflösung setzt sich im Allgemeinen aus 32,5 % Harnstoff und 67,5 % Wasser zusammen.

Aus dem Stand der Technik sind Abgasnachbehandlungssysteme bekannt, welche einen motornahen ersten SCR-Katalysator, insbesondere einen Partikelfilter mit einer SCR-Beschichtung und einen zweiten SCR-Katalysator aufweisen, welcher in einer motorfernen Unterbodenlage des Kraftfahrzeuges angeordnet ist. Der motornahe Partikelfilter mit der SCR-Beschichtung kann nach einem Kaltstart des Verbrennungsmotors schneller auf seine Betriebstemperatur aufgeheizt werden und somit zeitnah nach einem Kaltstart des Verbrennungsmotors für eine effiziente Konvertierung der Sickoxidemissionen genutzt werden. Der motorferne zweite SCR-Katalysator wird bei hohen Motorlasten und/oder bei einer Regeneration des Partikelfilters genutzt, bei welcher der motornahe Partikelfilter mit der SCR-Beschichtung oberhalb des zur selektiven, katalytische Reduktion notwendigen Temperaturbereichs betrieben wird und somit nur für eine unzureichende Konvertierung der Stickoxide sorgt oder um bei hohen Motorlasten ein zusätzliches Katalysatorvolumen für die selektive katalytische Reduktion von Stickoxiden bereitzustellen. Die motornahe Anordnung des Partikelfilters mit der SCR-Beschichtung führt zudem dazu, dass nur eine kurze Mischstrecke zur Vermischung von Reduktionsmittel und Abgas vor Eintritt in den Partikelfilter vorhanden ist und somit die Gleichverteilung über den Querschnitt des Partikelfilters eingeschränkt ist. Dieser Effekt wird bei hohen Abgasmassenströmen und damit verbundenen hohen Strömungsgeschwindigkeiten im Abgaskanal verstärkt. Dies kann dazu führen, dass unabhängig von der Temperatur die Konvertierungsleistung des Partikelfilters nicht ausreicht und zusätzlich die Konvertierungsleistung des zweiten SCR-Katalysators notwendig ist.

Mit Einführung der Abgasnorm EU7 werden neben den Stickoxidemissionen auch die Emissionen an Ammoniak begrenzt, welche in den vorhergehenden Abgasgesetzgebungen bislang unlimitiert waren. Zwar lassen sich die chemischen Vorgänge in der Abgasnachbehandlung modellieren, um die benötigte Menge an Reduktionsmittel zur Reduzierung der Stickoxidemissionen abschätzen zu können, jedoch führen Ungenauigkeiten bei der chemischen Modellierung der SCR-Katalysatoren, welche beispielsweise aus Bauteiltoleranzen herrühren zu Ungenauigkeiten in der Vorhersage der benötigten Reduktionsmittelmenge. Diese Ungenauigkeiten können dazu führen, dass es trotz hoher Anstrengungen bei der Abgasnachbehandlung entweder zu einer Emission von Stickoxiden oder einer Emission von Ammoniak kommt.

Aus der DE 10 2015 221 982 A1 ist ein Abgasnachbehandlungssystem für einen Dieselmotor bekannt, bei welchem in der Abgasanlage ein Oxidationskatalysator, stromabwärts des Oxidationskatalysators ein Partikelfilter mit einer SCR-Beschichtung und stromabwärts des Partikelfilters mit der SCR-Beschichtung ein zweiter SCR-Katalysator angeordnet sind. Zur Einspritzung von flüssigem Reduktionsmittel für den SCR-Katalysator und/oder für den SCR-beschichteten Partikelfilter ist eine erste Einspritzposition stromaufwärts des SCR-beschichteten Partikelfilters in Form einer ersten Dosiereinrichtung und eine zweite Einspritzposition stromaufwärts des SCR-Katalysators und stromabwärts des SCR-beschichteten Partikelfilters in Form einer zweiten Dosiereinrichtung vorgesehen. Die Einspritzpositionen für die Einspritzung von flüssigem Reduktionsmittel werden in Abhängigkeit von den Betriebszuständen des SCR-Katalysatorsystems gewählt.

Die DE 10 2008 036 885 A1 offenbart ein Verfahren zum Betreiben einer Abgasreinigungsanlage mit einem SCR-Katalysator zur Reinigung eines Abgases eines Kraftfahrzeug-Verbrennungsmotors, bei welchem von einer durch eine Steuereinheit ansteuerbaren Dosiereinheit ein Ammoniak enthaltendes Reduktionsmittel mit einer einstellbaren Dosierrate dem Abgas zudosiert wird. Ferner wird dem SCR-Katalysator ein entsprechend der Zudosierung mit Ammoniak angereichertes Abgas zugeführt. Ein Rechenmodell berechnet einen Ammoniakfüllstandswert für einen Füllstand von im SCR-Katalysator gespeichertem Ammoniak und eine Modell-Dosierrate für die Zudosierung des Reduktionsmittels in das Abgas des Verbrennungsmotors. Ferner wird durch das Rechenmodell ein vorgegebener Soll-Füllstand von im SCR-Katalysator gespeichertem Ammoniak und/oder ein durch das Rechenmodell vorgegebener Soll-Wirkungsgrad für einen Stickoxid-Umsatz mit im SCR-Katalysator gespeichertem und/oder dem SCR-Katalysator zugeführtem Ammoniak gesteuert.

Ferner ist aus der DE 10 2012 221 905 A1 ein Verfahren zum Betreiben eines Abgasnachbehandlungssystems bekannt, das wenigstens eine erste SCR-Einrichtung und wenigstens eine zweite SCR-Einrichtung aufweist. Weiterhin ist in Abgasstromrichtung stromaufwärts der ersten SCR-Einrichtung eine Dosiereinrichtung für Reaktionsmittel zur Versorgung der SCR-Einrichtungen vorgesehen. Dabei wird ein gewünschter Gesamtwirkungsgrad der SCR-Einrichtungen vorgegeben. Anhand einer Modellierung des Abgasnachbehandlungssystems wird in Abhängigkeit von dem gewünschten Gesamtwirkungsgrad ein Soll-Wert ermittelt, der den Beladungsgrad der ersten SCR-Einrichtung mit Reaktionsmittel repräsentiert. Die Dosierung des Reaktionsmittels wird zur Erreichung des Soll-Wertes entsprechend eingestellt.

Aus der DE 10 2019 107 544 A1 ist ein Verfahren zum Betreiben eines Abgasnachbehandlungssystems für einen Verbrennungsmotor bekannt. Der Verbrennungsmotor ist mit seinem Auslass mit einer Abgasanlage verbunden, in welcher in Strömungsrichtung eines Abgasstroms des Verbrennungsmotors ein motornaher erster SCR-Katalysator und stromabwärts des ersten SCR-Katalysators ein zweiter SCR-Katalysator angeordnet sind. Dabei wird der Ammoniakfüllstand des ersten SCR-Katalysators abgesenkt, wenn der Ammoniakfüllstand auf dem zweiten SCR-Katalysator einen kritischen Beladungszustand überschreitet und die Bauteiltemperatur oder die Abgastemperatur oberhalb eines Schwellenwertes liegt.

Die DE 10 2019 124 728 A1 offenbart ein Verfahren zur Abgasnachbehandlung eines Verbrennungsmotors, wobei die Abgasnachbehandlungsvorrichtung einen ersten SCR-Katalysator und einen zweiten SCR-Katalysator aufweist. Dabei wird ein Ammoniakfüllstand des zweiten SCR-Katalysators ermittelt. Um einen Abbau des Ammoniakfüllstands auf dem zweiten SCR-Katalysator zu begünstigen, wird eine Betriebsstrategie des Verbrennungsmotors dahingehend angepasst, dass die Menge an NOx-Rohemissionen im Abgas des Verbrennungsmotors erhöht wird.

Der Erfindung liegt nun die Aufgabe zugrunde, bei einem Abgasnachbehandlungssystem mit mehreren SCR-Katalysatoren eine möglichst effiziente Konvertierung der Stickoxidemissionen zu ermöglichen und zeitgleich eine erhöhte Emission an Ammoniak zu vermeiden.

Erfindungsgemäß wird diese Aufgabe durch ein Verfahren zum Betreiben eines Abgasnachbehandlungssystems für einen Verbrennungsmotor, welcher mit seinem Auslass mit einer Abgasanlage verbunden ist, in welcher in Strömungsrichtung eines Abgases des Verbrennungsmotors ein motornaher erster SCR-Katalysator und stromabwärts des motornahenden ersten SCR-Katalysators ein zweiter SCR-Katalysator angeordnet ist, gelöst.

Stromaufwärts des ersten SCR-Katalysators ist ein erstes Dosierelement angeordnet, mit welchem ein Reduktionsmittel, insbesondere wässrige Harnstofflösung, stromaufwärts des ersten SCR-Katalysators in den Abgaskanal eindosierbar ist. Stromabwärts des ersten SCR-Katalysators und stromaufwärts des zweiten SCR-Katalysators kann ein zweites Dosierelement angeordnet sein, mit welchem das Reduktionsmittel stromabwärts des ersten SCR-Katalysators und stromaufwärts des zweiten SCR-Katalysators in den Abgaskanal eindosierbar ist. Das Verfahren umfasst folgende Schritte:
- Ermitteln einer Bauteiltemperatur des zweiten SCR-Katalysators und/oder einer Abgastemperatur am zweiten SCR-Katalysator;
- Vergleichen der ermittelten Bauteiltemperatur oder der ermittelten Abgastemperatur mit einer jeweiligen Schwellentemperatur;
- Ermitteln des Ammoniakfüllstands auf dem zweiten SCR-Katalysator;
- Absenken des Ammoniakfüllstands des ersten SCR-Katalysators, wenn der Ammoniakfüllstand des zweiten SCR-Katalysators eine kritische Beladung übersteigt und die Bauteiltemperatur oder die Abgastemperatur oberhalb des jeweiligen Schwellenwertes liegt,
- Konvertieren der Stickoxide im Abgasstrom des Verbrennungsmotors durch den zweiten SCR-Katalysator, wodurch der Füllstand des zweiten SCR-Katalysators reduziert wird, wobei
- während der Absenkung des Ammoniakfüllstands auf dem ersten SCR-Katalysator ein Wirkungsgrad der SCR-Katalysatoren modelliert und parallel durch Stickoxidsensoren in der Abgasanlage stromaufwärts und stromabwärts der SCR-Katalysatoren gemessen wird, und wobei
- bei einem Abfall des Wirkungsgrades unter einen definierten Schwellenwert eine Eindosierung von Reduktionsmittel durch das zweite Dosierelement von einer Füllstandsregelung in Hinblick auf den Ammoniakfüllstand des zweiten SCR-Katalysators auf eine vorgesteuerte Dosierung umgeschaltet wird.

Unter einem motornahen ersten SCR-Katalysator ist in diesem Zusammenhang ein SCR-Katalysator zu verstehen, dessen Einlass mit einer Abgaslauflänge von maximal 80 cm, vorzugsweise maximal 50 cm, von dem Auslass des Verbrennungsmotors beabstandet ist.

Bei der Abgasnachbehandlung von Abgasen eines Dieselmotors wird eine möglichst hohe Konvertierungsleistung der Stickoxide durch die SCR-Katalysatoren angestrebt. Da eine Messung der Stickoxide und eine direkte Regelung der Reduktionsmitteldosierung durch eine Abgassensorik bislang nicht möglich ist, da die Stickoxidsensoren eine Querempfindlichkeit für Ammoniak aufweisen, wird ein Modell zur Konvertierungsleistung der SCR-Katalysatoren und zum Ammoniakfüllstand der SCR-Katalysatoren verwendet. Dieses Modell kann durch die Stickoxidsensoren plausibilisiert werden. Durch ein erfindungsgemäßes Verfahren ist es möglich, den Füllstand der SCR-Katalysatoren zu kontrollieren und einen AmmoniakDurchbruch durch den zweiten SCR-Katalysator betriebssicher zu vermeiden. Ferner ermöglicht das vorgeschlagene Verfahren eine höhere Beladung der SCR-Katalysatoren mit Ammoniak, wodurch die Konvertierungsleistung bezüglich der Stickoxidemissionen verbessert wird. Zusätzlich kann der Reduktionsmittelverbrauch verringert werden, da kein Reduktionsmittel als Ammoniak-Schlupf über den zweiten SCR-Katalysator verloren geht. Ferner ermöglicht das erfindungsgemäße Verfahren eine Reduzierung der Stickoxid und Ammoniak-Emissionen, wenn die Konvertierungsleistung der SCR-Katalysatoren von der im Modell hinterlegten Konvertierungsleistung abweicht und auf Basis des Modells ansonsten zu viel oder zu wenig Reduktionsmittel in die Abgasanlage eindosiert würde. In einem ersten Eskalationsschritt wird dabei die Eindosierung vor dem zweiten SCR-Katalysator auf eine vorgesteuerte Dosierung, welche auch als Inline-Dosierung bezeichnet wird, umgeschaltet, um eine hinreichende Konvertierung der Stickoxidemissionen durch den zweiten SCR-Katalysator sicherzustellen und einen Anstieg der Stickoxidemissionen durch eine unzureichende Konvertierung zu vermeiden.

Durch die in den abhängigen Ansprüchen aufgeführten Merkmale sind vorteilhafte Verbesserungen und nicht triviale Weiterentwicklungen des im unabhängigen Anspruch aufgeführten Verfahrens zum Betreiben eines Abgasnachbehandlungssystems für einen Verbrennungsmotor möglich.

In einer bevorzugten Ausgestaltung des Verfahrens ist vorgesehen, dass zusätzlich die Absenkung des Ammoniakfüllstands des ersten SCR-Katalysators beendet wird, wenn der Wirkungsgrad der SCR-Katalysatoren auch nach Umstellung auf eine vorgesteuerte Dosierung weiterhin unter dem Schwellenwert liegt. Um sicherzustellen, dass auch weiterhin eine effiziente Konvertierung der Stickoxidemissionen durch den ersten SCR-Katalysator möglich ist, wird in einem zweiten Eskalationsschritt die Absenkung der Ammoniak-Beladung des ersten SCR-Katalysators beendet, um hinreichend Ammoniak für die Konvertierung der Stickoxide auf dem ersten SCR-Katalysator sicherzustellen.

In einer weiteren Verbesserung des Verfahrens ist vorgesehen, dass zusätzlich die Rohemissionen des Verbrennungsmotors erhöht werden, um den Abbau des Ammoniakfüllstands auf dem zweiten SCR-Katalysator zu beschleunigen.

In einer vorteilhaften Ausgestaltung des Verfahrens ist vorgesehen, dass die vorgesteuerte Dosierung des Reduktionsmittels durch das zweite Dosierelement stromaufwärts des zweiten SCR-Katalysators beendet wird, wenn die Abweichung zwischen einem Sollwert und einem Istwert des Ammoniakfüllstands des zweiten SCR-Katalysators einen Schwellenwert unterschreitet.

In einer weiteren Verbesserung des Verfahrens ist vorgesehen, dass in einem Motorsteuergerät des Verbrennungsmotors ein Modell für die Ammoniak-Speicherfähigkeit des ersten SCR-Katalysators und des zweiten SCR-Katalysators abgelegt ist, wobei die Beladung des Ammoniakspeichers des zweiten SCR-Katalysators aus dem ermittelten Ammoniakschlupf über den ersten SCR-Katalysator und die Menge des durch das zweite Dosierelement eindosierten Reduktionsmittels und die Menge des durch Konvertierung der Stickoxidemissionen verbrauchten Ammoniaks berechnet wird. Durch eine Anpassung des Modells kann die eindosierte Reduktionsmittelmenge angepasst werden, um einen Ammoniakdurchbruch durch den zweiten SCR-Katalysator und somit einen Anstieg der Endrohremissionen zu vermeiden.

Alternativ kann die Be- und Entladung des Ammoniakspeichers der SCR-Katalysatoren auch durch NOx-Sensoren überwacht werden, welche eine Querempfindlichkeit für Ammoniak aufweisen. Dabei kann insbesondere ein Ammoniakdurchbruch durch den ersten SCR-Katalysator erkannt werden, welcher zu einer Beladung des Ammoniakspeichers des zweiten SCR-Katalysators führt.

Besonders bevorzugt ist dabei, dass der modellierte Wirkungsgrad der SCR-Katalysatoren angepasst wird, wenn der modellierte Wirkungsgrad der SCR-Katalysatoren von dem gemessenen Wirkungsgrad derart abweicht, dass der gemessene Wirkungsgrad unter den Schwellenwert abfällt. Dadurch kann das Modell entsprechend an die gemessenen Konvertierungsraten angepasst und die Eindosierung von Stickoxiden sowie die Berechnung der Ammoniak-Beladungen der SCR-Katalysatoren verbessert werden.

In einer bevorzugten Ausführungsform der Erfindung ist vorgesehen, dass eine thermische Wechselbeanspruchung des ersten SCR-Katalysators zu einer Freisetzung von Ammoniak führt, wobei das freigesetzte Ammoniak in dem zweiten SCR-Katalysator eingespeichert wird und den Füllstand des zweiten SCR-Katalysators erhöht. Dadurch ist eine Beladung des zweiten SCR-Katalysators auch ohne eine zusätzliche Eindosierung von Reduktionsmittel durch das zweite Dosierelement möglich. Durch ein erfindungsgemäßes Verfahren wird eine Überladung des zweiten SCR-Katalysators mit Ammoniak betriebssicher verhindert, da rechtzeitig eine Entleerung des Ammoniakspeichers durch einen Reduktionsmittelverbrauch bei der selektiven katalytischen Reduktion durchgeführt wird.

In einer vorteilhaften Verbesserung des Verfahrens ist vorgesehen, dass der motornahe erste SCR-Katalysator im Normalbetrieb auf einen Ammoniakfüllstand von 60 % bis 100 % der maximalen Ammoniakspeicherfähigkeit und der zweite SCR-Katalysator auf einen Ammoniakfüllstand von 50 % bis 90 %, bevorzugt von 60 % bis 80 % konditioniert werden. Dadurch kann sichergestellt werden, dass eine effiziente Konvertierung der Stickoxide erfolgt, wobei ein Ammoniakdurchbruch durch den zweiten SCR-Katalysator betriebssicher verhindert wird.

In einer bevorzugten Ausführungsform des Verfahrens ist vorgesehen, dass die Absenkung des Ammoniakfüllstands des ersten SCR-Katalysators durch eine Regeneration eines Partikelfilters erfolgt. Dabei ist der erste SCR-Katalysator vorzugsweise selbst als Partikelfilter mit einer Beschichtung zur selektiven, katalytischen Reduktion von Stickoxiden ausgeführt. Alternativ kann ein Partikelfilter dem ersten SCR-Katalysator auch vor- oder nachgeschaltet sein. Bei einer Regeneration des Partikelfilters wird ein Temperaturniveau am ersten SCR-Katalysator erreicht, welches zu einer thermischen Desorption von im ersten SCR-Katalysator eingespeichertem Ammoniak führt. Dieses Ammoniak wird in dem zweiten SCR-Katalysator eingespeichert, wodurch sich dessen Füllstand erhöht. Um nach einer Regeneration den Füllstand des zweiten SCR-Katalysators abzusenken, ist es sinnvoll, auf eine Eindosierung von Reduktionsmittel zu verzichten und zunächst das im zweiten SCR-Katalysator eingespeicherte Ammoniak zur Konvertierung der Stickoxide zu nutzen, um den Füllstand des zweiten SCR-Katalysators zu reduzieren.

In einer vorteilhaften Ausführungsform des Verfahrens ist vorgesehen, dass der Schwellenwert für die Bauteiltemperatur des zweiten SCR-Katalysators bei 250 °C liegt. Ab dieser Temperatur ist eine effiziente Konvertierung der Stickoxidemissionen durch den zweiten SCR-Katalysator zu erwarten. Somit kann sichergestellt werden, dass die zur selektiven katalytischen Reduktion von Stickoxiden notwendige Light-Off-Temperatur auf dem zweiten SCR-Katalysator erreicht ist.

Ein weiterer Teilaspekt der Erfindung betrifft ein Abgasnachbehandlungssystem für einen Verbrennungsmotor, welcher mit seinem Auslass mit einer Abgasanlage verbunden ist, in welcher in Strömungsrichtung eines Abgases des Verbrennungsmotors ein motornaher erster SCR-Katalysator und stromabwärts des ersten SCR-Katalysators, vorzugsweise in einer Unterbodenlage eines Kraftfahrzeuges, ein zweiter SCR-Katalysator angeordnet sind. Stromaufwärts des ersten SCR-Katalysators ist ein erstes Dosierelement angeordnet, mit welchem ein Reduktionsmittel stromaufwärts des ersten SCR-Katalysators in den Abgaskanal eindosierbar ist. Stromabwärts des ersten SCR-Katalysators und stromaufwärts des zweiten SCR-Katalysators kann ein zweites Dosierelement angeordnet sein, mit welchem das Reduktionsmittel stromabwärts des ersten SCR-Katalysators und stromaufwärts des zweiten SCR-Katalysators in den Abgaskanal eindosierbar ist. Alternativ kann der zweite SCR-Katalysator auch durch eine Überdosierung des Reduktionsmittels durch das erste Dosierelement mit Ammoniak beladen werden. Das Abgasnachbehandlungssystem ist über ein Motorsteuergerät betreibbar, welches dazu eingerichtet ist, ein erfindungsgemäßes Verfahren durchzuführen, wenn ein maschinenlesbarer Programmcode durch das Motorsteuergerät ausgeführt wird. Durch ein erfindungsgemäßes Abgasnachbehandlungssystem ist es möglich, die Stickoxidemissionen des Verbrennungsmotors zu minimieren und den Reduktionsmitteleinsatz zu optimieren. Insbesondere kann durch das erfindungsgemäße Abgasnachbehandlungssystem der Beladungszustand der SCR-Katalysatoren, insbesondere des zweiten SCR-Katalysators, in Abhängigkeit von der Betriebssituation des Verbrennungsmotors optimiert werden, um eine Überdosierung von Ammoniak zu vermeiden und eine effiziente Konvertierung von Stickoxiden zu gewährleisten.

In einer bevorzugten Ausführungsform des Abgasnachbehandlungssystems ist vorgesehen, dass der zweite SCR-Katalysator einen Ammoniak-Sperrkatalysator aufweist oder dem zweiten SCR-Katalysator ein Ammoniak-Sperrkatalysator nachgeschaltet ist. Durch einen Ammoniak-Sperrkatalysator kann vermieden werden, dass eine Überdosierung von Reduktionsmittel zu einer Erhöhung der Ammoniak-Endrohremissionen führt. Somit kann betriebssicher erreicht werden, dass selbst bei Ammoniak-Schlupf über den ersten SCR-Katalysator, insbesondere einen Partikelfilter mit einer SCR-Beschichtung, das im Abgaskanal stromabwärts des ersten SCR-Katalysators vorhandene Ammoniak umgesetzt wird.

In einer bevorzugten Ausführungsform des Abgasnachbehandlungssystems ist vorgesehen, dass in der Abgasanlage eine Turbine eines Abgasturboladers angeordnet ist, wobei stromabwärts der Turbine des Abgasturboladers und stromaufwärts des ersten Dosierelements ein Oxidationskatalysator oder ein NOx-Speicherkatalysator angeordnet ist. Durch einen Oxidationskatalysator oder einen NOx-Speicherkatalysator, welcher eine Oxidationskomponente aufweist, kann das Verhältnis von Stickstoffmonoxid und Stickstoffdioxid verändert werden, wodurch die Effizienz der selektiven katalytischen Reduktion von Stickoxiden gesteigert werden kann.

In einer weiteren Verbesserung des Abgasnachbehandlungssystems ist vorgesehen, dass der erste SCR-Katalysator als Partikelfilter mit einer SCR-Beschichtung ausgeführt ist, wobei stromabwärts des Partikelfilters und stromaufwärts des zweiten SCR-Katalysators eine Niederdruck-Abgasrückführung aus dem Abgaskanal abzweigt. Durch den Partikelfilter können Rußpartikel und sonstige Feststoffpartikel aus dem Abgasstrom herausgefiltert werden, sodass diese nicht über die Niederdruck-Abgasrückführung in das Luftversorgungssystem zurückgeführt werden und dort zu Beschädigungen, insbesondere zu Beschädigungen an dem Verdichter des Abgasturboladers, führen können. Zudem können durch eine Abgasrückführung über die Niederdruck-Abgasrückführung in bekannter Weise die Stickoxid-Rohemissionen des Verbrennungsmotors minimiert werden, wodurch der Reduktionsmitteleinsatz in der Abgasnachbehandlung ebenfalls reduziert werden kann.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Gleiche Bauteile oder Bauteile mit gleicher Funktion sind dabei in den unterschiedlichen Figuren mit den gleichen Bezugsziffern gekennzeichnet. Es zeigen:
- Figur 1: einen Verbrennungsmotor mit einem erfindungsgemäßen Abgasnachbehandlungssystem; und
- Figur 2: ein Ablaufdiagramm zur Durchführung eines erfindungsgemäßen Verfahrens zum Betreiben eines Abgasnachbehandlungssystems mit mindestens zwei SCR-Katalysatoren.

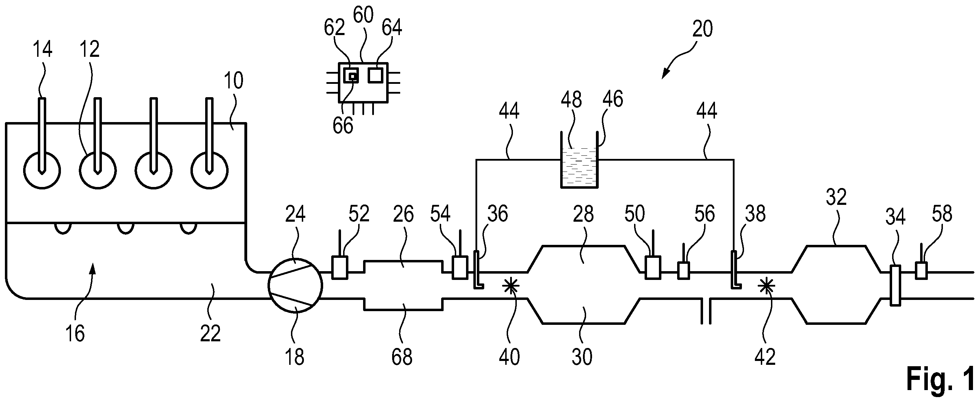

Figur 1 zeigt die schematische Darstellung eines Verbrennungsmotors 10. Der Verbrennungsmotor 10 ist als ein direkteinspritzender Dieselmotor ausgeführt und weist mehrere Brennräume 12 auf. An den Brennräumen 12 ist jeweils ein Kraftstoffinjektor 14 zur Einspritzung eines Kraftstoffes in den jeweiligen Brennraum 12 angeordnet. Der Verbrennungsmotor 10 ist mit seinem Auslass 16 mit einer Abgasanlage 20 verbunden. Der Verbrennungsmotor 10 kann ferner eine Hochdruck-Abgasrückführung mit einem Hochdruck-Abgasrückführungsventil, über welches ein Abgas des Verbrennungsmotors 10 von dem Auslass 16 zum Einlass zurückgeführt werden kann. An den Brennräumen 12 sind Einlassventile und Auslassventile angeordnet, mit welchen eine fluidische Verbindung zu den Brennräumen 12 oder von den Brennräumen 12 zur Abgasanlage 20 geöffnet oder verschlossen werden kann.

Die Abgasanlage 20 umfasst einen Abgaskanal 22, in welchem in Strömungsrichtung eines Abgases des Verbrennungsmotors 10 durch den Abgaskanal 22 eine Turbine 24 eines Abgasturboladers 18 angeordnet ist, welche einen nicht dargestellten Verdichter im Ansaugtrakt über eine Welle antreibt. Der Abgasturbolader 18 ist vorzugsweise als Abgasturbolader 18 mit variabler Turbinengeometrie ausgeführt. Dazu sind einem Turbinenrad der Turbine 24 verstellbare Leitschaufeln vorgeschaltet, über welche die Anströmung des Abgases auf die Schaufeln der Turbine 24 variiert werden kann. Stromabwärts der Turbine 24 sind mehrere Abgasnachbehandlungskomponenten 26, 28, 30, 32, 68 vorgesehen. Dabei ist unmittelbar stromabwärts der Turbine 24 als erste Komponente der Abgasnachbehandlung ein Oxidationskatalysator 26 oder ein NOx-Speicherkatalysator 68 angeordnet. Stromabwärts des Oxidationskatalysators 26 oder des NOx-Speicherkatalysators 68 ist ein motornaher erster SCR-Katalysator 28, 30, insbesondere ein Partikelfilter 30 mit einer Beschichtung zur selektiven katalytischen Reduktion von Stickoxiden (SCR-Beschichtung), angeordnet. Stromabwärts des motornahen ersten SCR-Katalysators 28, 30 ist vorzugsweise in Unterbodenlage eines Kraftfahrzeuges ein zweiter SCR-Katalysator 32 im Abgaskanal 22 angeordnet. Der zweite SCR-Katalysator 32 kann einen Oxidationskatalysator, insbesondere einen Ammoniak-Sperrkatalysator 34 aufweisen. Alternativ kann dem zweiten SCR-Katalysator 32 ein Oxidationskatalysator oder ein Ammoniak-Sperrkatalysator 34 nachgeschaltet sein. Stromabwärts des Oxidationskatalysators 26 oder des NOx-Speicherkatalysators 68 und stromaufwärts des ersten SCR-Katalysators 28, 30 ist ein erstes Dosierelement 36, insbesondere ein wassergekühltes Dosierelement, zur Eindosierung eines Reduktionsmittels 48 in den Abgaskanal 22 vorgesehen. Stromabwärts des ersten SCR-Katalysators 28, 30, insbesondere stromabwärts des Partikelfilters 30 mit der SCR-Beschichtung, zweigt eine Abgasrückführungsleitung einer Niederdruck-Abgasrückführung aus dem Abgaskanal 22 ab. Stromabwärts der Verzweigung und stromaufwärts des zweiten SCR-Katalysators 32 ist ein zweites Dosierelement 38, insbesondere ein luftgekühltes oder wassergekühltes Dosierelement, angeordnet, um das Reduktionsmittel 48 in den Abgaskanal 22 stromaufwärts des zweiten SCR-Katalysators 32 einzubringen. Das erste Dosierelement 36 und das zweite Dosierelement 38 sind jeweils über eine Reduktionsmittelleitung 44 mit einem gemeinsamen Reduktionsmittelbehälter 46 verbunden, in welchem das Reduktionsmittel 48 bevorratet ist. Ferner umfasst die Abgasanlage 20 eine Abgasklappe, mit welcher die Abgasrückführung über die Niederdruck-Abgasrückführung gesteuert werden kann.

In der Abgasanlage 20 ist stromabwärts des Oxidationskatalysators 26 oder des NOx-Speicherkatalysators 68 ein erster NOx-Sensor 54 angeordnet. Stromabwärts des ersten SCR-Katalysators 28, 30 und stromaufwärts der Verzweigung für die Abgasrückführung kann ein zweiter NOx-Sensor 56 angeordnet. Ferner ist stromabwärts des zweiten SCR-Katalysators 32 ein dritter NOx-Sensor 58 angeordnet. Dem Partikelfilter 30 ist ein Differenzdrucksensor zugeordnet, mit welchem eine Druckdifferenz Δp über den Partikelfilter 30 ermittelt werden kann. Auf diese Weise kann der Beladungszustand des Partikelfilters 30 ermittelt und bei Überschreiten eines definierten Beladungsniveaus eine Regeneration des Partikelfilters 30 eingeleitet werden. Ferner sind in der Abgasanlage 20 ein Temperatursensor 50 und gegebenenfalls. weitere Abgassensoren 52 vorgesehen, um die Abgastemperatur T_{EG} zu ermitteln.

Stromabwärts des ersten Dosierelements 36 und stromaufwärts des ersten SCR-Katalysators 28, 30, insbesondere des Partikelfilters 30 mit der SCR-Beschichtung, kann ein erster Abgasmischer 40 vorgesehen sein, um eine Durchmischung von Abgasstrom des Verbrennungsmotors 10 und Reduktionsmittel 48 vor Eintritt in den ersten SCR-Katalysator 28, 30 zu verbessern und die Länge der Mischstrecke zu verkürzen. Stromabwärts des zweiten Dosierelements 38 und stromaufwärts des zweiten SCR-Katalysators 32 kann ein zweiter Abgasmischer 42 angeordnet sein, um die Vermischung von Abgasstrom und Reduktionsmittel 48 zu verbessern und das Verdampfen des Reduktionsmittels 48 im Abgaskanal 22 zu unterstützen.

Der Verbrennungsmotor 10 ist mit einem Motorsteuergerät 60 verbunden, welches über nicht dargestellte Signalleitungen mit den Abgassensoren 52, NOx-Sensoren 54, dem Differenzdrucksensor, dem Temperatursensor 50 sowie mit den Kraftstoffinjektoren 14 des Verbrennungsmotors 10 und den Dosierelementen 36, 38 verbunden ist. Das Motorsteuergerät 60 umfasst eine Speichereinheit 62 und eine Recheneinheit 64, sowie einen in der Speichereinheit 62 abgelegten maschinenlesbaren Programmcode 66.

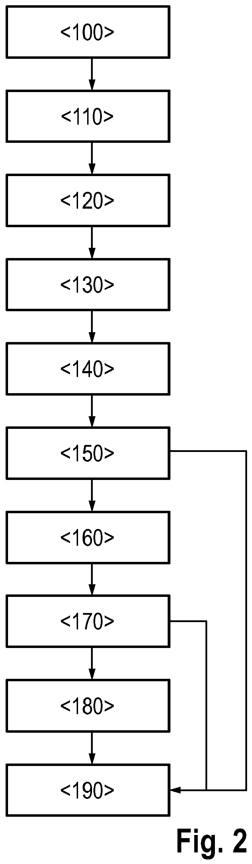

In Figur 2 ist ein Ablaufdiagramm zur Durchführung eines erfindungsgemäßen Verfahrens zum Betreiben eines solchen Abgasnachbehandlungssystems dargestellt. In einem ersten Verfahrensschritt <100> wird eine Bauteiltemperatur T_{SCR2} des zweiten SCR-Katalysators 32 und eine Ammoniak-Beladung des zweiten SCR-Katalysators 32 ermittelt. Alternativ oder zusätzlich kann auch eine Abgastemperatur T_{EG} am zweiten SCR-Katalysator 32 ermittelt werden. In einem Verfahrensschritt <110> wird die ermittelte Bauteiltemperatur T_{SCR2} und/oder die Abgastemperatur T_{EG} mit einer jeweiligen Schwellentemperatur T_{S1}, T_{S2} verglichen. Liegt die ermittelte Ammoniak-Beladung des zweiten SCR-Katalysator 32 oberhalb einer kritischen Grenzbeladung und Bauteiltemperatur T_{SCR2} oder die Abgastemperatur T_{EG} oberhalb der jeweiligen Schwellentemperatur T_{S1}, T_{S2}, so wird in einem Verfahrensschritt <120> die Beladung des Ammoniakspeichers des ersten SCR-Katalysators 28, 30 abgesenkt. Dadurch gelangen Stickoxide in den Abgaskanal stromabwärts des ersten SCR-Katalysators 28, 30, da eine vollständige Konvertierung der Stickoxide bei dem abgesenkten Ammoniakfüllstand nicht mehr möglich ist. In einem Verfahrensschritt <130> werden die Stickoxide mit dem im zweiten SCR-Katalysator 32 eingespeicherten Ammoniak umgesetzt, wodurch sich der Füllstand des zweiten SCR-Katalysators 32 reduziert. In einem Verfahrensschritt <140> wird während der Absenkung des Ammoniakfüllstands auf dem ersten SCR-Katalysator 28, 30 ein Wirkungsgrad der SCR-Katalysatoren 28, 30 ,32 modelliert und parallel (zusätzlich) durch die Stickoxidsensoren 54, 56, 58 vor und nach den SCR-Katalysatoren gemessen. In einem Verfahrensschritt <150> wird der bestimmte Wirkungsgrad mit einem Schwellenwert für den Wirkungsgrad verglichen. Liegt der bestimmte Wirkungsgrad der SCR-Katalysatoren 28, 30, 32 unterhalb des Schwellenwertes, so wird in einem Verfahrensschritt <160> eine Eindosierung von Reduktionsmittel 48 durch das zweite Dosierelement 38 von einer Füllstandsregelung auf dem zweiten SCR-Katalysator 32 auf eine vorgesteuerte Dosierung, welche auch als Online-Dosierung bezeichnet wird, umgeschaltet. In einem Verfahrensschritt <170> erfolgt ein weiterer Abgleich des Wirkungsgrads der SCR-Katalysatoren 28, 30, 32 mit dem Schwellenwert. Liegt der ermittelte Wirkungsgrad trotz der Anpassung der Dosierstrategie weiterhin unterhalb des Schwellenwertes, so wird in einem Verfahrensschritt <180> zusätzlich die Absenkung des Füllstands des ersten SCR-Katalysators 28, 30 beendet, um die Reduktionsmittelmenge an den tatsächlichen Bedarf zur effizienten Konvertierung der Stickoxidemissionen anzupassen und eine Verschwendung des Reduktionsmittels 48 sowie einen damit verbundenen Anstieg der Ammoniak und/oder Stickoxidemissionen zu vermeiden.

Ist der Ammoniakspeicher des zweiten SCR-Katalysators 32 hinreichend entleert, sodass die Gefahr eines Ammoniakdurchbruchs durch den zweiten SCR-Katalysator 32 ausgeschlossen werden kann, so kann in einem Verfahrensschritt <190> die Beladung des ersten SCR-Katalysators 28, 30 mit Ammoniak wieder erhöht werden, wozu das Reduktionsmittel 48 durch das erste Dosierelement 36 wieder in den Abgaskanal 22 eindosiert wird, bis eine im Wesentlichen vollständige Beladung des Ammoniakspeichers des ersten SCR-Katalysators 28, 30 erreicht ist. Dabei wird der Ammoniakspeicher des ersten SCR-Katalysators 28, 30 auf einen Füllstand von 50 % - 100 %, vorzugsweise von 80 % - 100 % konditioniert, um eine effiziente Konvertierung der Stickoxide im Abgasstrom sicherzustellen.

### Bezugszeichenliste

- 10: Verbrennungsmotor
- 12: Brennraum
- 14: Kraftstoffinjektor
- 16: Auslass
- 18: Abgasturbolader

- 20: Abgasanlage
- 22: Abgaskanal
- 24: Turbine
- 26: Oxidationskatalysator
- 28: erster SCR-Katalysator

- 30: Partikelfilter mit SCR-Beschichtung
- 32: zweiter SCR-Katalysator
- 34: Ammoniak-Sperrkatalysator
- 36: erstes Dosierelement
- 38: zweites Dosierelement

- 40: erster Abgasmischer
- 42: zweiter Abgasmischer
- 44: Reduktionsmittelleitung
- 46: Reduktionsmittelbehälter
- 48: Reduktionsmittel

- 50: Temperatursensor
- 52: Abgassensor
- 54: erster NOx-Sensor
- 56: zweiter NOx-Sensor
- 58: dritter NOx-Sensor
- 60: Motorsteuergerät
- 62: Speichereinheit
- 64: Recheneinheit
- 66: maschinenlesbarer Programmcode
- 68: NOx-Speicherkatalysator

## Patentansprüche

1. Verfahren zum Betreiben eines Abgasnachbehandlungssystem eines Verbrennungsmotors (10), wobei der Verbrennungsmotor (10) mit seinem Auslass (16) mit einer Abgasanlage (20) verbunden ist, in welcher in Strömungsrichtung eines Abgases des Verbrennungsmotors (10) ein motornaher erster SCR-Katalysator (28, 30) und stromabwärts des ersten SCR-Katalysators (28, 30) ein zweiter SCR-Katalysator (32) angeordnet sind, wobei stromaufwärts des ersten SCR-Katalysators (28, 30) ein erstes Dosierelement (36), mit welchem ein Reduktionsmittel (48) stromaufwärts des ersten SCR-Katalysators (28, 30) in den Abgaskanal (22) eindosierbar ist, und stromabwärts des ersten SCR-Katalysators (28, 30) und stromaufwärts des zweiten SCR-Katalysators (32) ein zweites Dosierelement (38) zur Eindosierung des Reduktionsmittels (48) angeordnet sind, welches folgende Schritte umfasst:
- Ermitteln einer Bauteiltemperatur (T_{SCR2}) des zweiten SCR-Katalysators (32) und/oder einer Abgastemperatur (T_{EG}) am zweiten SCR-Katalysator (32);
- Vergleich der ermittelten Bauteiltemperatur (T_{SCR2}) oder der ermittelten Abgastemperatur (T_{EG}) mit einer jeweiligen Schwellentemperatur (T_{S1}, T_{S2});
- Ermitteln eines Ammoniakfüllstands des zweiten SCR-Katalysators (32);
- Absenkung des Ammoniakfüllstands des ersten SCR-Katalysators (28, 30), wenn der zweite SCR-Katalysator (32) einen kritischen Füllstand überschreitet und die Bauteiltemperatur (T_{SCR2}) oder die Abgastemperatur (T_{EG}) oberhalb des jeweiligen Schwellenwertes (T_{S1}, T_{S2}) liegt;
- Konvertierung der Stickoxide im Abgasstrom des Verbrennungsmotors (10) durch den zweiten SCR-Katalysator (32), wodurch der Ammoniakfüllstand des zweiten SCR-Katalysators (32) reduziert wird, wobei
- während der Absenkung des Ammoniakfüllstands auf dem ersten SCR-Katalysator (28, 30) ein Wirkungsgrad der SCR-Katalysatoren (28, 30, 32) modelliert und durch Stickoxidsensoren (54, 56, 58) vor und nach den SCR-Katalysatoren (28, 30, 32) gemessen wird, wobei
- bei einem Abfall des Wirkungsgrads unter einen definierten Schwellenwert eine Eindosierung von Reduktionsmittel (48) durch das zweite Dosierelement (38) von einer Füllstandsregelung auf eine vorgesteuerte Dosierung umgeschaltet wird.

2. Verfahren zum Betreiben eines Abgasnachbehandlungssystems nach Anspruch 1, wobei zusätzlich die Absenkung das Füllstands des ersten SCR-Katalysators (28, 30) beendet wird, wenn der Wirkungsgrad auch nach Umstellung auf eine vorgesteuerte Dosierung weiterhin unter dem Schwellenwert liegt.

3. Verfahren zum Betreiben eines Abgasnachbehandlungssystems nach einem der Ansprüche 1 oder 2, wobei zusätzlich die Stickoxid-Rohemissionen des Verbrennungsmotors (10) erhöht werden, um den Abbau des Ammoniakfüllstands auf dem zweiten SCR-Katalysator (32) zu beschleunigen.

4. Verfahren zum Betreiben eines Abgasnachbehandlungssystems nach Anspruch 1 bis 3, wobei die vorgesteuerte Dosierung durch das zweite Dosierelement (38) stromaufwärts des zweiten SCR Katalysators (32) beendet wird, wenn die Abweichung zwischen Sollwert und Istwert des Ammoniakfüllstands des zweiten SCR-Katalysators (32) einen Schwellwert unterschreitet.

5. Verfahren zur Abgasnachbehandlung nach einem der Ansprüche 1 bis 4, wobei in einem Motorsteuergerät (60) des Verbrennungsmotors (10) ein Modell für die Ammoniak-Speicherfähigkeit des ersten SCR-Katalysators (28, 30) und des zweiten SCR-Katalysators (32) abgelegt ist, wobei die Beladung des Ammoniakspeichers des zweiten SCR-Katalysators (32) aus dem ermittelten Ammoniakschlupf über den ersten SCR-Katalysator (28, 30) und die Menge des durch das zweite Dosierelement (38) eindosierten Reduktionsmittels (48) und die durch NOx Umsatz verbrauchte Ammoniakmenge berechnet wird.

6. Verfahren zur Abgasnachbehandlung nach Anspruch 5, wobei das Modell entsprechend angepasst wird, wenn der modellierte Wirkungsgrad der SCR-Katalysatoren (28, 30, 32) von dem gemessenen Wirkungsgrad derart abweicht, dass der gemessene Wirkungsgrad unter den Schwellenwert abfällt.

7. Abgasnachbehandlungssystem für einen Verbrennungsmotor (10), welcher mit seinem Auslass (16) mit einer Abgasanlage (20) verbunden ist, in welcher in Strömungsrichtung eines Abgases des Verbrennungsmotors (10) ein motornaher erster SCR-Katalysator (28, 30) und stromabwärts des ersten SCR-Katalysators (28, 30) ein zweiter SCR-Katalysator (32) angeordnet sind, wobei stromaufwärts des ersten SCR-Katalysators (28, 30) ein erstes Dosierelement (36), mit welchem ein Reduktionsmittel (48) stromaufwärts des ersten SCR-Katalysators (28, 30) in den Abgaskanal (22) eindosierbar ist, und stromabwärts des ersten SCR-Katalysators (28, 30) und stromaufwärts des zweiten SCR-Katalysators (32) ein zweites Dosierelement (38) angeordnet sind, und wobei stromaufwärts des ersten SCR-Katalysator (28, 30) ein erster NOx-Sensor (54), stromabwärts des ersten SCR-Katalysators (28, 30) und stromaufwärts des zweiten SCR-Katalysators (32) ein zweiter NOx-Sensor (56) und stromabwärts des zweiten SCR-Katalysator (32) ein dritter NOx-Sensor (58) angeordnet sind, sowie mit einem Motorsteuergerät (60) mit einer Speichereinheit (62) und einer Recheneinheit (64) sowie einem in der Speichereinheit (62) abgelegten maschinenlesbaren Programmcode (66), welches dazu eingerichtet ist, ein Verfahren nach einem der Ansprüche 1 bis 6 durchzuführen, wenn der maschinenlesbarer Programmcode (66) durch die Recheneinheit (64) des Motorsteuergeräts (60) ausgeführt wird.

8. Abgasnachbehandlungssystem nach Anspruch 7, **dadurch gekennzeichnet, dass** der zweite SCR-Katalysator (32) einen Ammoniak-Sperrkatalysator (34) aufweist oder dem zweiten SCR-Katalysator (32) ein Ammoniak-Sperrkatalysator (34) nachgeschaltet ist.

9. Abgasnachbehandlungssystem nach Anspruch 7 oder 8, **dadurch gekennzeichnet, dass** in der Abgasanlage (20) eine Turbine (24) eines Abgasturboladers (18) angeordnet ist, wobei stromabwärts der Turbine (24) des Abgasturboladers (18) und stromaufwärts des ersten Dosierelements (36) ein Oxidationskatalysator (26) oder ein NOx-Speicherkatalysator (68) angeordnet ist.

10. Abgasnachbehandlungssystem nach einem der Ansprüche 7 bis 9, **dadurch gekennzeichnet, dass** der erste SCR-Katalysator (28, 30) als Partikelfilter (30) mit einer Beschichtung zur selektiven, katalytischen Reduktion von Stickoxiden ausgeführt ist.

## Claims

1. Method for operating an exhaust gas aftertreatment system of an internal combustion engine (10), wherein the internal combustion engine (10) is connected by its outlet (16) to an exhaust gas system (20) in which a first SCR catalytic converter (28, 30) close to the engine and a second SCR catalytic converter (32) downstream of the first SCR catalytic converter (28, 30) are arranged in the flow direction of an exhaust gas of the internal combustion engine (10), wherein upstream of the first SCR catalytic converter (28, 30) a first metering element (36) is arranged, by means of which a reducing agent (48) can be metered into the exhaust gas duct (22) upstream of the first SCR catalytic converter (28, 30), and downstream of the first SCR catalytic converter (28, 30) and upstream of the second SCR catalytic converter (32) a second metering element (38) for metering in the reducing agent (48) is arranged, which method comprises the following steps:
- determining a component temperature (T_{SCR2}) of the second SCR catalytic converter (32) and/or an exhaust gas temperature (T_{EG}) at the second SCR catalytic converter (32);
- comparing the determined component temperature (T_{SCR2}) or the determined exhaust gas temperature (T_{EG}) with a relevant threshold temperature (T_{S1}, T_{S2});
- determining an ammonia fill level of the second SCR catalytic converter (32);
- lowering the ammonia fill level of the first SCR catalytic converter (28, 30) if the second SCR catalytic converter (32) exceeds a critical fill level and the component temperature (T_{SCR2}) or the exhaust gas temperature (T_{EG}) is above the relevant threshold value (T_{S1}, T_{S2});
- converting the nitrogen oxides in the exhaust gas stream of the internal combustion engine (10) by means of the second SCR catalytic converter (32), the ammonia fill level of the second SCR catalytic converter (32) thereby being reduced, wherein
- an efficiency of the SCR catalytic converters (28, 30, 32) is modeled and measured, before and after the SCR catalytic converters (28, 30, 32), by nitrogen oxide sensors (54, 56, 58) while the ammonia fill level on the first SCR catalytic converter (28, 30) is being lowered, wherein
- if the efficiency falls below a defined threshold value, the metering in of the reducing agent (48) by the second metering element (38) is switched from a fill level control to a pre-controlled metering.

2. Method for operating an exhaust gas aftertreatment system according to claim 1, wherein additionally the lowering of the fill level of the first SCR catalytic converter (28, 30) is terminated if the efficiency is still below the threshold value even after switching to a pre-controlled metering.

3. Method for operating an exhaust gas aftertreatment system according to claim 1 or claim 2, wherein additionally the nitrogen oxide raw emissions of the internal combustion engine (10) are increased in order to accelerate the reduction of the ammonia fill level on the second SCR catalytic converter (32).

4. Method for operating an exhaust gas aftertreatment system according to claims 1 to 3, wherein the pre-controlled metering by the second metering element (38) upstream of the second SCR catalytic converter (32) is terminated if the deviation between the target value and the actual value of the ammonia fill level of the second SCR catalytic converter (32) falls below a threshold value.

5. Method for exhaust gas aftertreatment according to any of claims 1 to 4, wherein a model for the ammonia storage capacity of the first SCR catalytic converter (28, 30) and the second SCR catalytic converter (32) is stored in an engine control unit (60) of the internal combustion engine (10), wherein the loading of the ammonia storage of the second SCR catalytic converter (32) is calculated from the determined ammonia slip over the first SCR catalytic converter (28, 30), the amount of reducing agent (48) metered in by the second metering element (38) and the amount of ammonia consumed by NOx conversion.

6. Method for exhaust gas aftertreatment according to claim 5, wherein the model is adapted accordingly if the modeled efficiency of the SCR catalytic converters (28, 30, 32) deviates from the measured efficiency such that the measured efficiency falls below the threshold value.

7. Exhaust gas aftertreatment system for an internal combustion engine (10) which is connected by its outlet (16) to an exhaust gas system (20), in which a first SCR catalytic converter (28, 30) close to the engine and a second SCR catalytic converter (32) downstream of the first SCR catalytic converter (28, 30) are arranged in the flow direction of an exhaust gas of the internal combustion engine (10), wherein upstream of the first SCR catalytic converter (28, 30) a first metering element (36) is arranged, by means of which a reducing agent (48) can be metered into the exhaust gas duct (22) upstream of the first SCR catalytic converter (28, 30), and downstream of the first SCR catalytic converter (28, 30) and upstream of the second SCR catalytic converter (32) a second metering element (38) is arranged, and wherein a first NOx sensor (54) is arranged upstream of the first SCR catalytic converter (28, 30), a second NOx sensor (56) is arranged downstream of the first SCR catalytic converter (28, 30) and upstream of the second SCR catalytic converter (32), and a third NOx sensor (58) is arranged downstream of the second SCR catalytic converter (32), and which internal combustion engine has an engine control unit (60) comprising a memory unit (62), a computing unit (64), and a machine-readable program code (66) stored in the memory unit (62), which engine control unit is configured to carry out a method according to any of claims 1 to 6 when the machine-readable program code (66) is executed by the computing unit (64) of the engine control unit (60).

8. Exhaust gas aftertreatment system according to claim 7,
**characterized in that** the second SCR catalytic converter (32) has an ammonia blocking catalytic converter (34), or an ammonia blocking catalytic converter (34) is connected downstream of the second SCR catalytic converter (32).

9. Exhaust gas aftertreatment system according to claim 7 or claim 8,
**characterized in that** a turbine (24) of an exhaust gas turbocharger (18) is arranged in the exhaust gas system (20), an oxidation catalytic converter (26) or a NOx storage catalytic converter (68) being arranged downstream of the turbine (24) of the exhaust gas turbocharger (18) and upstream of the first metering element (36).

10. Exhaust gas aftertreatment system according to any of claims 7 to 9,
**characterized in that** the first SCR catalytic converter (28, 30) is designed as a particle filter (30) which has a coating for the selective, catalytic reduction of nitrogen oxides.

## Revendications

1. Procédé permettant de faire fonctionner un système de post-traitement des gaz d'échappement d'un moteur à combustion interne (10), dans lequel le moteur à combustion interne (10) est relié avec sa sortie (16) à un système d'échappement (20) dans lequel sont disposés, dans le sens d'écoulement de gaz d'échappement du moteur à combustion interne (10), un premier catalyseur RCS (28, 30) proche du moteur et, en aval du premier catalyseur RCS (28, 30), un second catalyseur RCS (32), dans lequel un premier élément de dosage (36) est disposé en amont du premier catalyseur RCS (28, 30), avec lequel élément de dosage un agent réducteur (48) peut être dosé et injecté en amont du premier catalyseur RCS (28, 30) dans le canal d'échappement (22), et un second élément de dosage (38) est disposé en aval du premier catalyseur RCS (28, 30) et en amont du second catalyseur RCS (32) pour le dosage et l'injection de l'agent réducteur (48), lequel procédé comprend les étapes suivantes :
- la détermination d'une température de composant (T_{RCS2}) du second catalyseur RCS (32) et/ou d'une température de gaz d'échappement (T_{EG}) au niveau du second catalyseur RCS (32) ;
- la comparaison de la température de composant (T_{RCS2}) déterminée ou de la température de gaz d'échappement (T_{EG}) déterminée avec une température seuil (T_{S1},T_{S2}) respective ;
- la détermination d'un niveau d'ammoniac du second catalyseur RCS (32) ;
- l'abaissement du niveau d'ammoniac du premier catalyseur RCS (28, 30) lorsque le second catalyseur RCS (32) dépasse un niveau critique et que la température de composant (T_{RCS2}) ou la température de gaz d'échappement (T_{EG}) est supérieure à la valeur seuil (T_{S1},T_{S2}) respective ;
- la conversion des oxydes d'azote dans le flux de gaz d'échappement du moteur à combustion interne (10) par le second catalyseur RCS (32), moyennant quoi le niveau d'ammoniac du second catalyseur RCS (32) est réduit, dans lequel
- pendant l'abaissement du niveau d'ammoniac au niveau du premier catalyseur RCS (28, 30), une efficacité des catalyseurs RCS (28, 30, 32) est modélisée et mesurée par des capteurs d'oxydes d'azote (54, 56, 58) avant et après les catalyseurs RCS (28, 30, 32), dans lequel
- en cas de chute de l'efficacité en dessous d'une valeur seuil définie, un dosage d'injection d'agent réducteur (48) par le second élément de dosage (38) est commuté d'une régulation de niveau à un dosage contrôlé.

2. Procédé permettant de faire fonctionner un système de post-traitement des gaz d'échappement selon la revendication 1, dans lequel, en outre, l'abaissement du niveau du premier catalyseur RCS (28, 30) est terminé si l'efficacité reste inférieure à la valeur seuil même après le passage à un dosage contrôlé.

3. Procédé permettant de faire fonctionner un système de post-traitement des gaz d'échappement selon l'une des revendications 1 ou 2, dans lequel, en outre, les émissions brutes d'oxydes d'azote du moteur à combustion interne (10) sont augmentées afin d'accélérer la dégradation du niveau d'ammoniac au niveau du second catalyseur RCS (32).

4. Procédé permettant de faire fonctionner un système de post-traitement des gaz d'échappement selon les revendications 1 à 3, dans lequel le dosage contrôlé par le second élément de dosage (38) en amont du second catalyseur RCS (32) est arrêté lorsque l'écart entre la valeur de consigne et la valeur réelle du niveau d'ammoniac du second catalyseur RCS (32) est inférieur à une valeur seuil.

5. Procédé pour le post-traitement des gaz d'échappement selon l'une des revendications 1 à 4, dans lequel un modèle pour la capacité d'accumulation d'ammoniac du premier catalyseur RCS (28, 30) et du second catalyseur RCS (32) est mémorisé dans un appareil de commande de moteur (60) du moteur à combustion interne (10), dans lequel le chargement de l'accumulateur d'ammoniac du second catalyseur RCS (32) est calculé à partir de l'ammoniac dans le canal déterminé dans le premier catalyseur RCS (28, 30) et de la quantité d'agent réducteur (48) dosé et injecté par le second élément de dosage (38) et de la quantité d'ammoniac consommée par la conversion de NOx.

6. Procédé pour le post-traitement des gaz d'échappement selon la revendication 5, dans lequel le modèle est adapté en conséquence lorsque l'efficacité modélisée des catalyseurs RCS (28, 30, 32) s'écarte de l'efficacité mesurée de telle sorte que l'efficacité mesurée tombe en dessous de la valeur seuil.

7. Système de post-traitement des gaz d'échappement pour un moteur à combustion interne (10) qui est relié avec sa sortie (16) à un système d'échappement (20) dans lequel sont disposés, dans le sens d'écoulement de gaz d'échappement du moteur à combustion interne (10), un premier catalyseur RCS (28, 30) proche du moteur et, en aval du premier catalyseur RCS (28, 30), un second catalyseur RCS (32), dans lequel un premier élément de dosage (36) est disposé en amont du premier catalyseur RCS (28, 30), avec lequel élément de dosage un agent réducteur (48) peut être dosé et injecté en amont du premier catalyseur RCS (28, 30) dans le canal d'échappement (22), et un second élément de dosage (38) est disposé en aval du premier catalyseur RCS (28, 30) et en amont du second catalyseur RCS (32), et dans lequel un premier capteur de NOx (54) est disposé en amont du premier catalyseur RCS (28, 30), un deuxième capteur de NOx (56) est disposé en aval du premier catalyseur RCS (28, 30) et en amont du second catalyseur RCS (32), et un troisième capteur de NOx (58) est disposé en aval du second catalyseur RCS (32), et comportant un appareil de commande de moteur (60) comportant une unité de stockage (62) et une unité de calcul (64) ainsi qu'un code de programme lisible par machine (66) enregistré dans l'unité de stockage (62), lequel code de programme est configuré pour mettre en œuvre un procédé selon l'une des revendications 1 à 6 lorsque le code de programme lisible par machine (66) est exécuté par l'unité de calcul (64) de l'appareil de commande de moteur (60).

8. Système de post-traitement des gaz d'échappement selon la revendication 7, **caractérisé en ce que** le second catalyseur RCS (32) présente un catalyseur de blocage d'ammoniac (34) ou un catalyseur de blocage d'ammoniac (34) est monté en aval du second catalyseur RCS (32).

9. Système de post-traitement des gaz d'échappement selon la revendication 7 ou 8, **caractérisé en ce qu'**une turbine (24) d'un turbocompresseur à gaz d'échappement (18) est disposée dans le système d'échappement (20), dans lequel un catalyseur d'oxydation (26) ou un catalyseur d'accumulation de NOx (68) est disposé en aval de la turbine (24) du turbocompresseur à gaz d'échappement (18) et en amont du premier élément de dosage (36).

10. Système de post-traitement des gaz d'échappement selon l'une des revendications 7 à 9, **caractérisé en ce que** le premier catalyseur RCS (28, 30) est conçu sous forme de filtre à particules (30) comportant un revêtement pour la réduction catalytique sélective d'oxydes d'azote.
